# EUROPEAN PATENT APPLICATION

(11) **EP 4 422 382 A1**
(43) Date of publication of application: **28.08.2024**
(21) Application number: 22883286.1
(22) Date of filing: 21.09.2022
(51) Int. Cl.: H10N 60/81, F25B 9/00

(54) **ADDED VALUE DETERMINING METHOD FOR CIRCULATION COOLING TYPE INITIAL COOLING OF SUPERCONDUCTING DEVICE**

(30) Priority: 20.10.2021 JP 2021171628
(71) Applicant: Sumitomo Heavy Industries, Ltd., Tokyo 141-6025 (JP)
(72) Inventor: YOKOYA, Izuru, Nishitokyo-shi Tokyo 188-8585 (JP)
(74) Representative: Louis Pöhlau Lohrentz
(86) International application number: PCT/JP2022/035154
(87) International publication number: WO 2023/067976

(57) **Abstract**

An added value determining method for circulation cooling type initial cooling of a superconducting device (100) is provided. This method includes: acquiring a liquid helium consumed amount in a case where a superconducting coil (102) is cooled from an ambient temperature to a target cryogenic temperature by immersion cooling using liquid helium or liquid helium and another liquid refrigerant; acquiring a liquid helium consumed amount in the circulation cooling type initial cooling; and presenting an added value of the circulation cooling type initial cooling with respect to the immersion cooling, based on a comparison between the liquid helium consumed amount in the immersion cooling and the liquid helium consumed amount in the circulation cooling type initial cooling.

## Description

### Technical Field

The present invention relates to an added value determining method for circulation cooling type initial cooling of a superconducting device.

### Background Art

A superconducting magnet can generate a strong static magnetic field at a cryogenic temperature equal to or lower than a superconducting critical temperature, and is used in various applications using a high magnetic field such as magnetic resonance imaging (MRI), for example. In order to activate the superconducting magnet at the time of manufacturing and shipping, at the time of inspection, or at the time of recovery from abnormality such as quenching, the superconducting magnet needs to be cooled from an ambient temperature (for example, room temperature) to a target cryogenic temperature, and this is often also referred to as initial cooling.

Immersion cooling in which a superconducting magnet is immersed in a cryogenic liquid refrigerant, for example, liquid helium or liquid nitrogen, is typically used for the initial cooling. The initial cooling by the immersion cooling consumes a very large amount (for example, at least 1000 liters) of cryogenic liquid refrigerant. Therefore, with the recent decrease in global helium production and the resulting rise in helium price, it is desired to reduce the amount of liquid helium used.

Therefore, circulation cooling type initial cooling in which a gas cooled to a cryogenic temperature is circulated to a superconducting magnet has been proposed. By using a circulation cooling device, it is possible to significantly reduce the amount of liquid helium that is consumed in the initial cooling, as compared with the immersion cooling.

### Citation List

### Patent Literature

[PTL 1] PCT Japanese Translation Patent Publication No. 2020-515038

### Summary of Invention

### Technical Problem

As a result of intensive studies on the initial cooling of the superconducting device, the inventor of the present invention has come to recognize the following problems. The circulation cooling type initial cooling has not yet become widespread. One reason for this is that the circulation cooling device is relatively expensive, while the frequency of initial cooling during the lifetime of the superconducting magnet is not high (in the minimum case, it is performed only at the time of manufacture and shipment). That is, it is considered that the reason why the circulation cooling type initial cooling is being prevented from becoming widespread is that it is difficult to find a value commensurate with the investment when introducing a circulation cooling device.

One exemplary object of an aspect of the present invention is to provide a techniques useful for popularizing circulation cooling type initial cooling of a superconducting device.

### Solution to Problem

According to an aspect of the present invention, there is provided an added value determining method for circulation cooling type initial cooling of a superconducting device. The superconducting device includes a liquid refrigerant tank that accommodates a superconducting coil inside. The circulation cooling type initial cooling includes (i) cooling the superconducting coil from an ambient temperature of the superconducting device to a predetermined cryogenic temperature by using a circulation cooling device that circulates a cooled gas to the liquid refrigerant tank, and (ii) cooling the superconducting coil from the predetermined cryogenic temperature to a target cryogenic temperature at which the superconducting coil is operated, by immersing the superconducting coil in liquid helium in the liquid refrigerant tank. This method includes: acquiring a liquid helium consumed amount in a case where the superconducting coil is cooled from the ambient temperature to the target cryogenic temperature by immersion cooling using liquid helium or liquid helium and another liquid refrigerant; acquiring a liquid helium consumed amount in the circulation cooling type initial cooling; and presenting an added value of the circulation cooling type initial cooling with respect to the immersion cooling, based on a comparison between the liquid helium consumed amount in the immersion cooling and the liquid helium consumed amount in the circulation cooling type initial cooling.

Any combination of the components described above, or replacement of components or expressions of the present invention with each other between methods, apparatuses, systems, computer programs, or the like is also effective as an aspect of the present invention.

### Advantageous Effects of Invention

According to the present invention, it is possible to provide a techniques useful for popularizing circulation cooling type initial cooling of a superconducting device.

### Brief Description of Drawings

Fig. 1 is a diagram schematically showing a superconducting device according to an embodiment.
Fig. 2 is a diagram schematically showing a circulation cooling device according to an embodiment together with the superconducting device.
Fig. 3 is a diagram schematically showing a device for determining an added value of circulation cooling type initial cooling of the superconducting device according to the embodiment.
Fig. 4 is a flowchart showing an added value determining method for the circulation cooling type initial cooling of the superconducting device according to the embodiment.

### Description of Embodiments

Hereinafter, embodiments for carrying out the present invention will be described in detail with reference to the drawings. In the description and drawings, identical or equivalent components, members, and processing are denoted by the same reference numerals, and overlapping description is omitted as appropriate. The scale or shape of each part that is shown in the drawings is conveniently set for ease of description and is not limitedly interpreted unless otherwise specified. The embodiments are exemplary and do not limit the scope of the present invention in any way. All features or combinations thereof described in the embodiments are not essential to the invention.

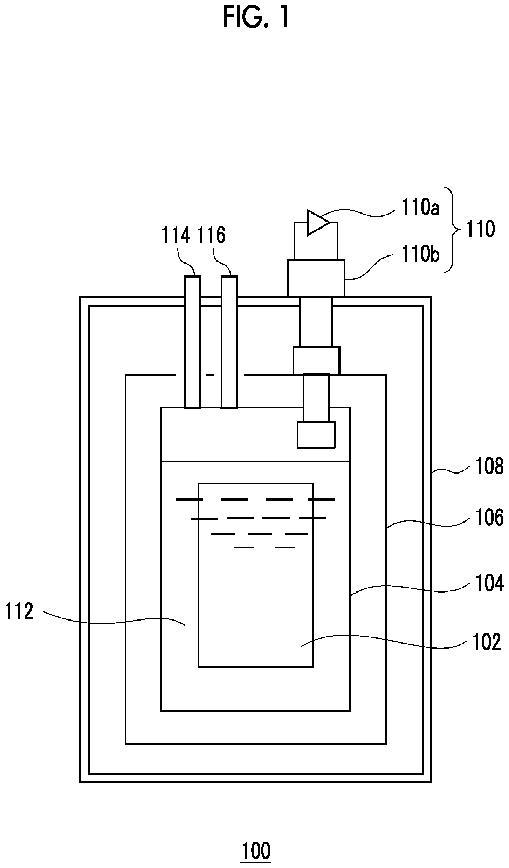

Fig. 1 is a diagram schematically showing a superconducting device 100 according to an embodiment. In this embodiment, the superconducting device 100 configures a part of a magnetic resonance imaging (MRI) system, for example. The superconducting device 100 includes a superconducting coil 102, a liquid refrigerant tank 104, a heat shield 106, a vacuum vessel 108, and a cryocooler 110.

When the superconducting coil 102 is used, the superconducting coil 102 is cooled to a cryogenic temperature equal to or lower than a critical temperature at which superconductivity is exhibited. An exciting current is supplied to the superconducting coil 102 from an external power source (not shown) disposed outside the vacuum vessel 108, whereby a strong magnetic field can be generated.

The liquid refrigerant tank 104 is configured to accommodate a liquid refrigerant 112 together with the superconducting coil 102. The superconducting device 100 can cool the superconducting coil 102 to a target cryogenic temperature and maintain the superconducting coil 102 at the target cryogenic temperature by using an immersion cooling type in which the superconducting coil 102 is immersed in a cryogenic liquid refrigerant such as liquid helium.

The heat shield 106 is configured to be disposed around the liquid refrigerant tank 104 and thermally protect the liquid refrigerant tank 104 and the superconducting coil 102 from radiant heat that may enter from outside the heat shield 106. The heat shield 106 is formed of a metal material such as copper, for example, or another material having high thermal conductivity.

The vacuum vessel 108 is an insulated vacuum vessel that provides a cryogenic vacuum environment suitable for bringing the superconducting coil 102 into a superconducting state, and is also called a cryostat. The liquid refrigerant tank 104 and the heat shield 106 are accommodated in the vacuum vessel 108 together with the superconducting coil 102. The vacuum vessel 108 is formed of a metal material such as stainless steel, for example, or another suitable high strength material so as to withstand ambient pressure (for example, atmospheric pressure). The vacuum vessel 108 is provided with a refrigerant inlet 114 and a refrigerant outlet 116. The liquid refrigerant 112 can be supplied to the liquid refrigerant tank 104 through the refrigerant inlet 114, and the liquid refrigerant 112 or a vaporized material thereof can be recovered through the refrigerant outlet 116.

The cryocooler 110 includes a compressor 110a and a cold head 110b that is also called an expander. The compressor 110a is disposed outside the vacuum vessel 108, and the cold head 110b is installed at the vacuum vessel 108 such that a low temperature part thereof is located inside the vacuum vessel 108. The compressor 110a is configured to recover a working gas of the cryocooler 110 from the cold head 110b, increase the pressure of the recovered working gas, and supply the working gas to the cold head 110b again. The compressor 110a and the cold head 110b configure a refrigeration cycle of the cryocooler 110, whereby the cold head 110b can provide a cryogenic refrigerant. The working gas is typically a helium gas. However, other suitable gases may be used. The cryocooler 110 is, for example, a Gifford-McMahon (GM) cryocooler. However, the cryocooler 110 may be a pulse tube cryocooler, a Stirling cryocooler, or another cryocooler.

During the operation of the superconducting device 100, a first-stage cooling stage of the cryocooler 110 is cooled to a first cooling temperature, for example, a temperature in a range of 30 K to 50 K, and a second-stage cooling stage of the cryocooler 110 is cooled to a second cooling temperature lower than the first cooling temperature, for example, a temperature in a range of 3 K to 20 K (for example, about 4 K). The heat shield 106 is thermally coupled to the first-stage cooling stage of the cryocooler 110 and cooled to the first cooling temperature. The second-stage cooling stage of the cryocooler 110 may be used for re-condensing the vaporized liquid refrigerant 112. Alternatively, the second-stage cooling stage of the cryocooler 110 may be thermally coupled to the superconducting coil 102 and cool the superconducting coil 102 to the second cooling temperature by conduction cooling.

Prior to the operation of the superconducting device 100, initial cooling of the superconducting device 100 is performed in order to start the superconducting device 100. The initial cooling is performed, for example, before shipping, as a final step in a manufacturing process of the superconducting device 100. Alternatively, the initial cooling may be performed after regular inspection of the superconducting device 100, or for recovery from abnormality such as quenching.

Initial cooling by immersion cooling is performed by immersing the superconducting coil 102 in the liquid refrigerant 112. The superconducting coil 102 may be cooled from an ambient temperature (for example, 295 K) of the superconducting device 100 to a target cryogenic temperature (for example, 4 K) by using only liquid helium as the liquid refrigerant 112. In this case, typically, a large amount of liquid helium, for example, several thousands of liters of liquid helium may be required.

In order to reduce the consumed amount of liquid helium, as the liquid refrigerant 112, another cryogenic liquid refrigerant having a higher boiling point than liquid helium, for example, liquid nitrogen, may be used for precooling. The superconducting coil 102 is precooled from an ambient temperature to a predetermined cryogenic temperature (for example, 77 K) by being immersed in liquid nitrogen, and then the liquid refrigerant 112 in the liquid refrigerant tank 104 is exchanged from liquid nitrogen to liquid helium, and the superconducting coil 102 may be further cooled from the predetermined cryogenic temperature to a target cryogenic temperature by being immersed in the liquid helium. In this case, a large amount of liquid nitrogen is still required for precooling. However, the consumed amount of liquid helium can be suppressed to, for example, about 1000 liters. Since the unit price of liquid nitrogen is significantly lower than that of liquid helium, the cost of the initial cooling can be reduced.

In order to further reduce the initial cooling cost of the superconducting device 100, circulation cooling type initial cooling in which a gas cooled to a cryogenic temperature is circulated to the superconducting device 100 has been proposed. The circulation cooling type initial cooling includes (i) cooling the superconducting coil 102 from an ambient temperature of the superconducting device 100 to a predetermined cryogenic temperature by using a circulation cooling device 10 that circulates a cooled gas to the liquid refrigerant tank 104, and (ii) cooling the superconducting coil 102 from the predetermined cryogenic temperature to a target cryogenic temperature at which the superconducting coil 102 is operated, by immersing the superconducting coil 102 in liquid helium in the liquid refrigerant tank 104.

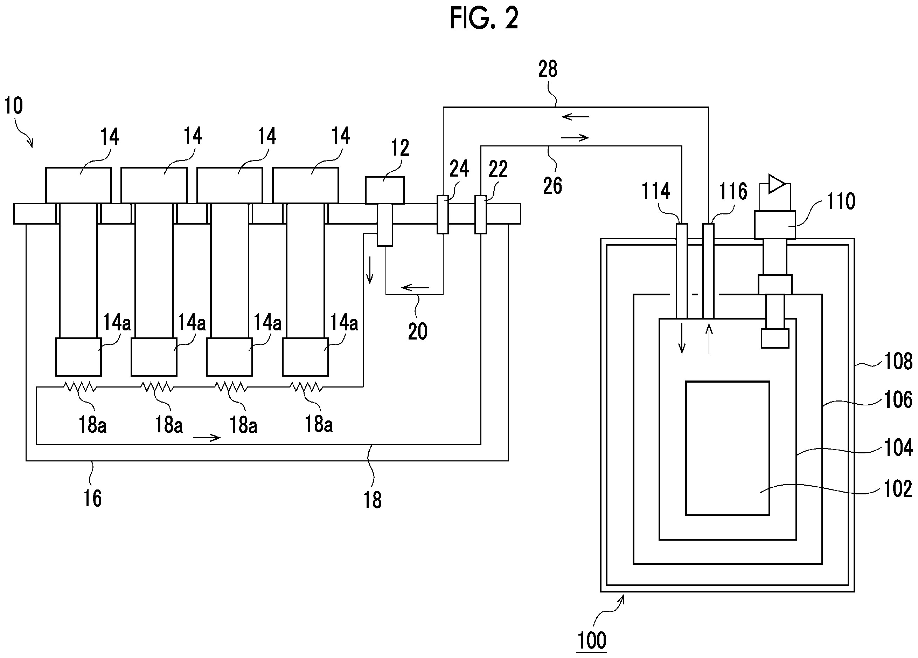

Fig. 2 is a diagram schematically showing the circulation cooling device 10 according to an embodiment together with the superconducting device 100. The circulation cooling device 10 is configured to cool a refrigerant gas to a cryogenic temperature and circulate the cooled refrigerant gas to the superconducting device 100. Although the refrigerant gas is a helium gas in this embodiment, other gases such as a nitrogen gas may be used in some cases. The circulation cooling device 10 includes a circulation device 12, at least one (in this embodiment, a plurality of, for example, four) cryocooler 14, a vacuum vessel 16, a supply line 18, and a recovery line 20.

The circulation device 12 is configured to send a refrigerant gas recovered from the recovery line 20 to the supply line 18, thereby allowing the refrigerant gas to be circulated between the circulation cooling device 10 and the superconducting device 100. The circulation device 12 is installed at the vacuum vessel 16. The circulation device 12 may be, for example, a fan.

Each of the plurality of cryocoolers 14 includes a cooling stage 14a for cooling the refrigerant gas, and is installed at the vacuum vessel 16 such that the cooling stage 14a is disposed within the vacuum vessel 16. The cryocooler 14 may be, for example, a Gifford-McMahon (GM) cryocooler, as with the cryocooler 110 of the superconducting device 100, or may be another cryocooler such as a pulse tube cryocooler or a Stirling cryocooler. The cryocooler 14 may be of a single stage type and may provide a cooling temperature (for example, a liquid nitrogen temperature) that is selected from a range of 100 K to 10 K, for example, to the cooling stage 14a.

The vacuum vessel 16 is an insulated vacuum vessel that provides a cryogenic vacuum environment inside, and is also called a cryostat. The supply line 18 and the recovery line 20 are accommodated in the vacuum vessel 16 together with the cooling stage 14a of the cryocooler 14. The wall surface of the vacuum vessel 16 is provided with a refrigerant gas supply port 22 and a refrigerant gas recovery port 24. The supply line 18 connects the circulation device 12 to the refrigerant gas supply port 22, and the recovery line 20 connects the refrigerant gas recovery port 24 to the refrigerant gas supply port 22.

The supply line 18 includes a heat exchanger 18a that cools the refrigerant gas by heat exchange with the cooling stage 14a of the cryocooler 14. The heat exchanger 18a is provided for each cooling stage 14a, and these heat exchangers 18a are connected in series.

When the circulation cooling type initial cooling is performed, the circulation cooling device 10 is connected to the superconducting device 100 by a supply-side transfer line 26 and a recovery-side transfer line 28. The supply-side transfer line 26 connects the refrigerant gas supply port 22 of the circulation cooling device 10 to the refrigerant inlet 114 of the superconducting device 100, and the recovery-side transfer line 28 connects the refrigerant gas recovery port 24 of the circulation cooling device 10 to the refrigerant outlet 116 of the superconducting device 100. The supply-side transfer line 26 and the recovery-side transfer line 28 may be flexible tubes compatible with a refrigerant gas cooled to a cryogenic temperature.

When the circulation device 12 operates, the refrigerant gas sequentially passes through the plurality of heat exchangers 18a connected in series on the supply line 18, and is cooled by the cooling stage 14a of each of the cryocoolers 14. The refrigerant gas cooled to the cooling temperature of the cooling stage 14a in this way is supplied to the liquid refrigerant tank 104 of the superconducting device 100 through the supply-side transfer line 26, and cools the superconducting coil 102. The refrigerant gas is recovered from the liquid refrigerant tank 104 through the recovery-side transfer line 28 to the recovery line 20 of the circulation cooling device 10 and is sent to the supply line 18 again by the circulation device 12. In the precooling of the superconducting device 100 using the circulation cooling device 10, a liquid refrigerant such as liquid nitrogen is not used.

By continuing such circulation of the refrigerant gas, the circulation cooling device 10 can cool the superconducting coil 102 of the superconducting device 100 to the cooling temperature of the refrigerant gas of the circulation cooling device 10. After the superconducting coil 102 has been precooled in this way, the operation of the circulation cooling device 10 is stopped and the circulation cooling device 10 is removed from the superconducting device 100.

Subsequently, liquid helium is supplied to the liquid refrigerant tank 104 of the superconducting device 100. By immersing the superconducting coil 102 in the liquid helium, the superconducting coil 102 is finally cooled to a target cryogenic temperature (for example, about 4 K), and the initial cooling is completed.

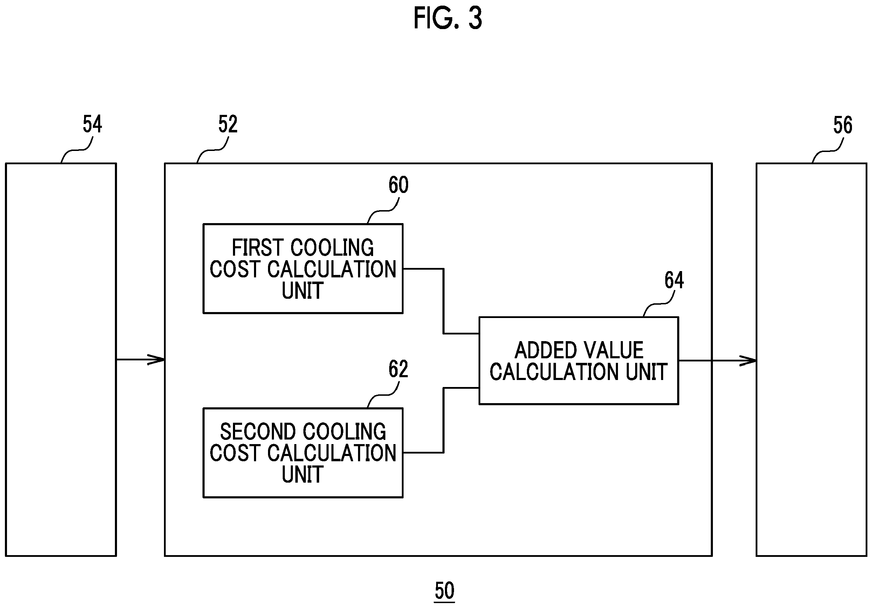

Fig. 3 is a diagram schematically showing a device for determining an added value of the circulation cooling type initial cooling of the superconducting device 100 according to the embodiment. An added value determining device 50 includes a calculation processing device 52, an input unit 54, and an output unit 56.

The internal configuration of the added value determining device 50 is realized using elements and circuits such as a CPU and a memory of a computer as a hardware configuration, and using a computer program or the like as a software configuration. However, in the drawing, the internal configuration is appropriately depicted as functional blocks that are realized by the cooperation between the hardware configuration and the software configuration. Those skilled in the art will understand that these functional blocks can be realized in various ways by combining hardware and software.

The added value determining device 50 may be mounted on a general-purpose computer such as a personal computer. The input unit 54 is configured to accept input data from a user or another device required to determine the added value of the circulation cooling type initial cooling and provide the input data to the calculation processing device 52, and may include, for example, input means such as a mouse or a keyboard for receiving input from a user, and/or communication means for communicating with other devices. The output unit 56 is configured to output the input data and/or the data generated by the calculation processing device 52, and may include, for example, output means such as a display or a printer.

The calculation processing device 52 is configured to execute an added value determining method to be described later, and includes a first cooling cost calculation unit 60, a second cooling cost calculation unit 62, and an added value calculation unit 64. The first cooling cost calculation unit 60 acquires the consumed amount of liquid helium (and the consumed amount of another liquid refrigerant in a case where it is used) in the initial cooling of the superconducting device 100 by the immersion cooling, and calculates the cooling cost of the initial cooling of the superconducting device 100 by the immersion cooling, based on the acquired information. The second cooling cost calculation unit 62 acquires the liquid helium consumed amount of the circulation cooling type initial cooling (and another usage cost of the circulation cooling device 10 in a case where it is applicable), and calculates the cooling cost of the circulation cooling type initial cooling, based on the acquired information. The added value calculation unit 64 calculates the added value of the circulation cooling type initial cooling with respect to the immersion cooling, based on a comparison between the calculated cooling cost of the immersion cooling and the calculated cooling cost of the circulation cooling type initial cooling.

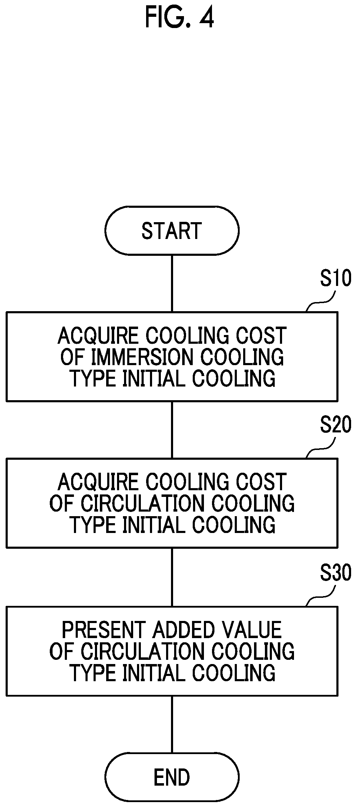

Fig. 4 is a flowchart showing an added value determining method for the circulation cooling type initial cooling of the superconducting device 100 according to the embodiment. For example, the added value determining device illustrated in Fig. 3 can execute this method. In this method, the cooling cost of the immersion cooling type initial cooling is acquired (S10), the cooling cost of the circulation cooling type initial cooling is acquired (S20), and the added value of the circulation cooling type initial cooling with respect to the immersion cooling is presented (S30). The order of S10 and S20 does not matter.

In the acquisition of the cooling cost of the immersion cooling type initial cooling (S10), first, the liquid helium consumed amount in a case where the superconducting coil 102 is cooled from the ambient temperature to the target cryogenic temperature by the immersion cooling is acquired. In a case where only liquid helium is used to cool the superconducting coil 102 from the ambient temperature to the target cryogenic temperature, the amount of liquid helium used is acquired as the liquid helium consumed amount. As another example, in a case where the superconducting coil 102 is first cooled from an ambient temperature to a predetermined cryogenic temperature (for example, 77 K) by a liquid refrigerant (for example, liquid nitrogen) other than liquid helium, and then cooled from the predetermined cryogenic temperature to a target cryogenic temperature by liquid helium, not only the liquid helium consumed amount but also the consumed amount of another liquid refrigerant is acquired.

The consumed amounts of these liquid refrigerants may be recorded by actually performing the immersion cooling of the superconducting device 100, and the recorded consumed amounts may be input to the input unit 54 and transmitted to the calculation processing device 52. Alternatively, the consumed amount of the liquid refrigerant may be estimated by simulating the initial cooling by the immersion cooling of the superconducting device 100 or empirically, and the estimated consumed amount may be input to the input unit 54 and transmitted to the calculation processing device 52.

The cooling cost of the immersion cooling type initial cooling is calculated by multiplying the liquid helium consumed amount of the immersion cooling by the helium price per unit amount in a case where only liquid helium is used. In a case where liquid helium and another liquid refrigerant are used, the cooling cost of the immersion cooling type initial cooling is calculated by calculating the liquid helium cost by multiplying the liquid helium consumed amount by the helium price per unit amount, calculating the other liquid refrigerant cost by multiplying the consumed amount of the other liquid refrigerant by the price of the liquid refrigerant per unit amount, and summing up the liquid helium cost and the liquid refrigerant cost. The calculation of the cooling cost of the immersion cooling type initial cooling may be performed by the first cooling cost calculation unit 60. Helium price data indicating the helium price per unit amount (for example, 1 liter) and liquid refrigerant price data indicating the price of the other liquid refrigerant per unit amount are input to the input unit 54 and provided to the calculation processing device 52, or may be stored in the calculation processing device 52 in advance.

As an example of the immersion cooling type initial cooling, it is assumed that in a case where the superconducting coil 102 is cooled from 300 K to 77 K by liquid nitrogen and further cooled from 77 K to 4 K by liquid helium, 2000 L of liquid nitrogen and 1500 L of liquid helium are used. Assuming that the unit prices of the liquid nitrogen and the liquid helium are 30 yen and 1800 yen per liter, respectively, the cooling cost of the immersion cooling type initial cooling is calculated to be 2,760,000 yen (= 2000 L × 30 yen/L + 1500 L × 1800 yen/L).

In the acquisition of the cooling cost of the circulation cooling type initial cooling (S20), the usage cost of the circulation cooling device 10 and the liquid helium consumed amount in the final step of the initial cooling are acquired. Then, the usage cost and the liquid helium price are added together as the cooling cost of the circulation cooling type initial cooling. The usage cost of the circulation cooling device 10 may include, for example, the cost of a helium gas used in the circulation cooling device 10, an electricity bill or the like due to the use of the circulation cooling device 10, and a cost that is generated with the use of the circulation cooling device 10. The liquid helium price is calculated by multiplying the liquid helium consumed amount by the helium price per unit amount, as with the case of the immersion cooling. The usage cost and liquid helium consumed amount of the circulation cooling device 10 may be estimated by actually performing the circulation cooling type initial cooling in the superconducting device 100, or by simulating the circulation cooling type initial cooling, or empirically, and the estimated usage cost and consumed amount may be input to the input unit 54 and transmitted to the calculation processing device 52. The calculation of the cooling cost of the circulation cooling type initial cooling may be performed by the second cooling cost calculation unit 62.

As an example of the circulation cooling type initial cooling, a case where the superconducting coil 102 is cooled from 300 K to 15 K by the circulation cooling device 10 and the superconducting coil 102 is further cooled from 15 K to 4 K by liquid helium is considered. Assuming that 400 L of liquid helium is used and the usage cost is 200,000 yen (for example, 50,000 yen for an electricity bill and 150,000 yen for a helium gas), the cooling cost of the circulation cooling type initial cooling is calculated to be 920,000 yen (= 400 L × 1800 yen/L + 200,000 yen).

The presentation of the added value of the circulation cooling type initial cooling with respect to the immersion cooling (S30) is based on a comparison between the liquid helium consumed amount of the immersion cooling and the liquid helium consumed amount of the circulation cooling type initial cooling. More specifically, the cooling cost of the circulation cooling type initial cooling may be deducted from the cooling cost of the immersion cooling type initial cooling, and the remaining amount may be calculated as the added value amount of the circulation cooling type initial cooling. The added value calculation unit 64 may perform this calculation and output data indicating the obtained added value to the output unit 56. The output unit 56 can present the acquired added value, based on the added value data.

From another point of view, the calculation of the added value is to calculate an added value amount by multiplying the difference between the liquid helium consumed amount of the immersion cooling and the liquid helium consumed amount of the circulation cooling type initial cooling by the helium price per unit amount. The usage cost of the circulation cooling device is deducted from this added value amount. Further, an amount equivalent to the consumed amount of a liquid refrigerant other than liquid helium that is used in the immersion cooling is added to the added value amount.

The presentation of the added value of the circulation cooling type initial cooling with respect to the immersion cooling (S30) may include calculating an amount obtained by multiplying the added value amount by a predetermined ratio as the usage fee of the circulation cooling device 10 in the circulation cooling type initial cooling. The predetermined ratio may be, for example, 1/2, or may be any value larger than 0 and smaller than 1. In the example described above, the usage fee of the circulation cooling device 10 can be calculated to be 920,000 yen (= (2,760,000 yen - 920,000 yen) × 1/2). The calculation of the usage fee of the circulation cooling device 10 may be performed by the added value calculation unit 64. The calculated usage fee may be output to the output unit 56.

According to the embodiment, the added value of the circulation cooling type initial cooling with respect to the immersion cooling can be grasped as a specific amount of money. Since this helps to financially recognize the technical value that is obtained by using the circulation cooling device 10, it is useful for popularizing the circulation cooling type initial cooling of the superconducting device 100.

For example, according to an agreement between the owner of the circulation cooling device 10 and the owner (or user) of the superconducting device 100, it is possible to determine a compensation in a case where the owner of the superconducting device 100 receives a loan of the circulation cooling device 10 from the owner of the circulation cooling device 10 and the circulation cooling type initial cooling is performed using the loaned circulation cooling device 10. As this compensation, the calculated usage fee of the circulation cooling device 10 can be used. That is, each time the owner of the superconducting device 100 performs the circulation cooling type initial cooling, the owner of the superconducting device 100 pays the owner of the circulation cooling device 10 the usage fee of the circulation cooling device 10 as the compensation.

In this way, the owner of the superconducting device 100 can perform the circulation cooling type initial cooling at a low usage fee as compared with high initial investment for purchasing the circulation cooling device 10 for the circulation cooling type initial cooling. The added value of the circulation cooling type initial cooling described above is based on the liquid helium consumed amount that can be reduced by the circulation cooling type initial cooling as compared with conventional immersion cooling, and the usage fee of the circulation cooling device 10 is based on this added value. Therefore, it is fair and reasonable. Therefore, such an agreement on the usage fee of the circulation cooling device 10 is useful for popularizing the circulation cooling type initial cooling of the superconducting device 100.

The present invention has been described above based on the examples. It will be understood by those skilled in the art that the present invention is not limited to the above embodiments, various design changes can be made, various modification examples are possible, and such modification examples are also within the scope of the present invention. Various features described in relation to an embodiment are also applicable to other embodiments. New embodiments resulting from combinations have the effect of each of embodiments which are combined.

In the embodiment described above, a case where the superconducting device 100 is installed in the MRI system has been described as an example. However, there is no limitation thereto. The superconducting device 100 may configure a part of, for example, a single crystal pulling device, an NMR system, an accelerator such as a cyclotron, a high-energy physical system such as a nuclear fusion system, or other equipment that utilizes a high magnetic field.

The present invention has been described using specific terms and phrases, based on the embodiments. However, the embodiments show only one aspect of the principles and applications of the present invention, and in the embodiments, many modifications or disposition changes are permitted within a scope which does not depart from the ideas of the present invention defined in the claims.

Embodiments of the present invention may also be expressed by numbered items as follows.

1. An added value determining method for circulation cooling type initial cooling of a superconducting device,
   in which the superconducting device includes a liquid refrigerant tank that accommodates a superconducting coil inside, and
   the circulation cooling type initial cooling includes (i) cooling the superconducting coil from an ambient temperature of the superconducting device to a predetermined cryogenic temperature by using a circulation cooling device that circulates a cooled gas to the liquid refrigerant tank, and (ii) cooling the superconducting coil from the predetermined cryogenic temperature to a target cryogenic temperature at which the superconducting coil is operated, by immersing the superconducting coil in liquid helium in the liquid refrigerant tank, the method including:
      acquiring a liquid helium consumed amount in a case where the superconducting coil is cooled from the ambient temperature to the target cryogenic temperature by immersion cooling using liquid helium or liquid helium and another liquid refrigerant;
      acquiring a liquid helium consumed amount in the circulation cooling type initial cooling; and
      presenting an added value of the circulation cooling type initial cooling with respect to the immersion cooling, based on a comparison between the liquid helium consumed amount in the immersion cooling and the liquid helium consumed amount in the circulation cooling type initial cooling.
2. The method according to Item 1, in which the presenting of the added value includes calculating the added value, based on the comparison between the liquid helium consumed amount in the immersion cooling and the liquid helium consumed amount in the circulation cooling type initial cooling.
3. The method according to Item 2, in which the calculating of the added value includes calculating an added value amount by multiplying a difference between the liquid helium consumed amount in the immersion cooling and the liquid helium consumed amount in the circulation cooling type initial cooling by a helium price per unit amount.
4. The method according to Item 3, in which the method further includes acquiring a usage cost of the circulation cooling device in the circulation cooling type initial cooling, and
   the calculating of the added value amount includes deducting the usage cost from the added value amount.
5. The method according to Item 3 or 4, in which the method further includes acquiring a consumed amount of the other liquid refrigerant in the immersion cooling, and
   the calculating of the added value amount includes adding an amount equivalent to the consumed amount of the other liquid refrigerant to the added value amount.
6. The method according to any one of Items 3 to 5, in which the presenting of the added value includes calculating an amount obtained by multiplying the added value amount by a predetermined ratio as a usage fee of the circulation cooling device in the circulation cooling type initial cooling.
7. The method according to Item 1, in which the presenting of the added value includes:
   inputting the liquid helium consumed amount in the immersion cooling and the liquid helium consumed amount in the circulation cooling type initial cooling to a computer; and
   causing the computer to calculate the added value, based on a comparison between the liquid helium consumed amount in the immersion cooling and the liquid helium consumed amount in the circulation cooling type initial cooling, and output the added value.
8. The method according to Item 7, in which the calculating of the added value includes causing the computer to calculate an added value amount by multiplying a difference between the liquid helium consumed amount in the immersion cooling and the liquid helium consumed amount in the circulation cooling type initial cooling by a helium price per unit amount.
9. The method according to Item 8, in which the method further includes inputting a usage cost of the circulation cooling device in the circulation cooling type initial cooling to the computer, and
   the calculating of the added value amount includes causing the computer to deduct the usage cost from the added value amount.
10. The method according to Item 8 or 9, in which the method further includes inputting a consumed amount of the other liquid refrigerant in the immersion cooling to the computer, and
   the calculating of the added value amount includes causing the computer to add an amount equivalent to the consumed amount of the other liquid refrigerant to the added value amount.
11. The method according to any one of Items 8 to 10, in which the presenting of the added value includes causing the computer to calculate an amount obtained by multiplying the added value amount by a predetermined ratio as a usage fee of the circulation cooling device in the circulation cooling type initial cooling.

### Industrial Applicability

The present invention can be used in the field of an added value determining method for circulation cooling type initial cooling of a superconducting device.

### Reference Signs List

- 10: circulation cooling device
- 50: added value determining device
- 100: superconducting device
- 102: superconducting coil
- 104: liquid refrigerant tank
- 112: liquid refrigerant.

## Claims

1. An added value determining method for circulation cooling type initial cooling of a superconducting device,
in which the superconducting device includes a liquid refrigerant tank that accommodates a superconducting coil inside, and
the circulation cooling type initial cooling includes (i) cooling the superconducting coil from an ambient temperature of the superconducting device to a predetermined cryogenic temperature by using a circulation cooling device that circulates a cooled gas to the liquid refrigerant tank, and (ii) cooling the superconducting coil from the predetermined cryogenic temperature to a target cryogenic temperature at which the superconducting coil is operated, by immersing the superconducting coil in liquid helium in the liquid refrigerant tank, the method comprising:
acquiring a liquid helium consumed amount in a case where the superconducting coil is cooled from the ambient temperature to the target cryogenic temperature by immersion cooling using liquid helium or liquid helium and another liquid refrigerant;
acquiring a liquid helium consumed amount in the circulation cooling type initial cooling; and
presenting an added value of the circulation cooling type initial cooling with respect to the immersion cooling, based on a comparison between the liquid helium consumed amount in the immersion cooling and the liquid helium consumed amount in the circulation cooling type initial cooling.

2. The method according to claim 1, wherein the presenting of the added value includes calculating the added value, based on the comparison between the liquid helium consumed amount in the immersion cooling and the liquid helium consumed amount in the circulation cooling type initial cooling.

3. The method according to claim 2, wherein the calculating of the added value includes calculating an added value amount by multiplying a difference between the liquid helium consumed amount in the immersion cooling and the liquid helium consumed amount in the circulation cooling type initial cooling by a helium price per unit amount.

4. The method according to claim 3, further comprising:
acquiring a usage cost of the circulation cooling device in the circulation cooling type initial cooling,
wherein the calculating of the added value amount includes deducting the usage cost from the added value amount.

5. The method according to claim 3 or 4, further comprising:
acquiring a consumed amount of the other liquid refrigerant in the immersion cooling,
wherein the calculating of the added value amount includes adding an amount equivalent to the consumed amount of the other liquid refrigerant to the added value amount.

6. The method according to any one of claims 3 to 5, wherein the presenting of the added value includes calculating an amount obtained by multiplying the added value amount by a predetermined ratio as a usage fee of the circulation cooling device in the circulation cooling type initial cooling.

7. The method according to claim 1, wherein the presenting of the added value includes:
inputting the liquid helium consumed amount in the immersion cooling and the liquid helium consumed amount in the circulation cooling type initial cooling to a computer; and
causing the computer to calculate the added value, based on a comparison between the liquid helium consumed amount in the immersion cooling and the liquid helium consumed amount in the circulation cooling type initial cooling, and output the added value.

8. The method according to claim 7, wherein the calculating of the added value includes causing the computer to calculate an added value amount by multiplying a difference between the liquid helium consumed amount in the immersion cooling and the liquid helium consumed amount in the circulation cooling type initial cooling by a helium price per unit amount.

9. The method according to claim 8, further comprising:
inputting a usage cost of the circulation cooling device in the circulation cooling type initial cooling to the computer,
wherein the calculating of the added value amount includes causing the computer to deduct the usage cost from the added value amount.

10. The method according to claim 8 or 9, further comprising:
inputting a consumed amount of the other liquid refrigerant in the immersion cooling to the computer,
wherein the calculating of the added value amount includes causing the computer to add an amount equivalent to the consumed amount of the other liquid refrigerant to the added value amount.

11. The method according to any one of claims 8 to 10, wherein the presenting of the added value includes causing the computer to calculate an amount obtained by multiplying the added value amount by a predetermined ratio as a usage fee of the circulation cooling device in the circulation cooling type initial cooling.

12. An added value determining device for circulation cooling type initial cooling of a superconducting device, comprising:
a calculation processing device configured to execute the method according to any one of claims 1 to 11.

13. A computer program including a command to cause a computer to execute the method according to any one of claims 1 to 11.
